# EUROPEAN PATENT APPLICATION

(11) **EP 0 567 351 A1**
(43) Date of publication of application: **27.10.1993**
(21) Application number: 93303218.7
(22) Date of filing: 23.04.1993
(51) Int. Cl.: F16F 15/16, F16D 3/74, F16D 3/72, F16D 3/80

(54) **Improved transmission shaft**

(71) Applicant: Venton-Walters, Roy, Alltami, Near Mold, Clwyd CH7 6RW (GB)
(72) Inventor: Venton-Walters, Roy, Alltami, Near Mold, Clwyd CH7 6RW (GB)

(57) **Abstract**

A simple light weight transmission shaft system having inbuilt liquid damping against torsional vibration which has automotive and general machinery applications, but is especially suited as a transmission shaft in propeller driven aircraft. It comprises a co-axial system with one member being proportionally more torsionally flexible than the other. The two co-axial members are connected solidly together at one end and are torsionally independent of each other along a portion, if not all, of the shaft system length where they terminate in a liquid charged chamber in which they connected torsionally only by means of a viscous or hydro-kinetic liquid damping medium. The torsionally more flexible shaft member transmits the whole mean driving torque.

## Description

This invention relates to a transmission shaft The design of transmission shafts is often compromised by the phenomenon of torsional vibration wherein, in its simplest form, two masses having a high polar moment of inertia connected to opposite ends of a rotating shaft are exited into torsional oscillation against each other, the relative flexibility of the interposed shaft being the spring medium. This phenomenon is often encountered in shaft systems driven by prime movers such as an internal combustion engines which transmit cyclic torque variations, or in systems involving aircraft propellers which commonly exhibit varying cyclic torque resistance. At its worst, when a system is excited to resonance at its natural frequency it can destructively exceed the limitations of the shaft, or fatigue the shaft prematurely.

According to contemporary practise, there are a number of methods by which torsional vibration can be overcome, or at least circumvented for practical purposes. These include making the shaft torsionally more rigid to raise the natural frequency of the system to above the primary exciting frequency, changing the natural frequency of the system to outside the operating range by adding masses at strategic points, fitting special flexible couplings, fitting special torsional vibration dampers of which there are a number of types, or of course, informing the operator not to run the system at a particular speed by perhaps having a 'drive through quick' band marked on a tachometer.

The problem is exacerbated in practice by the complex and differing possible harmonic modes vibration that may be encountered, and is especially difficult in the design of transmission shafts for rear mounted 'pusher' propeller aeroplanes where the requirements of clean aerodynamics dictate remote mounting of the engine from the propeller. This is made more difficult still by the need to keep weight to a minimum, which rules out many possible approaches to the problem, the fact that system frequency changes to some extent with centripetal tension in the propeller blades, and the European moves toward low noise, resulting in propellers of considerably higher polar moment. Furthermore, lightweight materials such as aluminium alloys and many modern composites, which may otherwise be desirable to use in an aircraft system design, are intrinsically more flexible than steel which is usually used in other applications.

The common design solution, apparently in current use for such propeller shaft systems involves the use of a proprietary flexible coupling in the system, which while appearing to 'solve' the problem at normal propeller/engine speeds, results in a low exciting frequency readily excitable at, or just above engine start-up. This low frequency susceptibility is then overcome by means of a centrifugal clutch fitted to the engine shaft.

Whilst such a system may prove a practical solution, despite its inevitable weight complexity and cost implications, it would appear to have a further potential weakness which may have a bearing on its formal airworthiness acceptability - that of propeller free- windmilling which is known to radically degrade an aircraft's glide ability. This could require the addition of a propeller brake, which again would add to weight, complexity and cost.

The invention serves to overcome these problems.

According to the present invention there is provided a transmission shaft system comprising two co-axial members with one member being more torsionally flexible than the other. The two co-axial members are connected solidly together at one end and are torsionally independent of each other along a portion, if not all, of the shaft system length where they terminate in a liquid charged chamber in which they connected torsionally only by means of a viscous or hydro-kinetic liquid damping medium. The torsionally more flexible shaft transmits the whole mean driving torque.

Specific embodiments of the invention will now be described by way of example with reference to the accompanying drawings in which:-
Figure 1 shows a diagrammatic cross sectional cut-away view along the length of a shaft system showing the internal mechanism where the inner shaft is the torsionally more flexible member.
Figure 2 shows a diagrammatic cross section cut away of a simple form of viscous integral damping chamber at one end of the shaft system of the type shown in Figure 1.
Figure 3 shows a diagrammatic end view of an alternative type of damping chamber where relative angular displacement between inner rotor and housing causes the damping fluid to be pumped between adjacent chambers through clearances or channels.
Figure 4 shows the driven end or propeller boss end of a shaft system where the outer co-axial member is the torsionally more flexible one, typically being an elastomer, and is much shorter than the inner, and serves as a means of containing the damping fluid without the need of special seals.

Referring to the drawings which show the shaft system in an application for driving the propeller of a light aeroplane in 'pusher' configuration. The shaft system is supported in the air-frame (not shown) on combined radial thrust bearing, 1, and needle roller bearing, 2, such that it is free to rotate about its longitudinal axis. The drive is transmitted into the shaft from an internal combustion engine (not shown) by means of a belt drive (not shown) to pulley, 3. The pulley, 3, is solidly connected to both the outer tubular shaft, 4, and inner shaft, 5, at 6 and 7 respectively. The innershaft, 5, connects directly to propeller boss, 8, which drives the propeller (not shown). The outer shaft, 4, has an integral inner wall, 9, and an end cap, 10, forming a chamber through which the inner shaft, 5, passes freely through seals, or combined bearings and seats, 11, set in the wall, 9, and end cap, 10. A cylindrical drum, 12, connected solidly to the inner shaft, 5, has a small annular and side clearance, 13, with the inside of the chamber (formed by 4, 9 and 10) and, apart from its torsional connection through the length of inner shaft, 5, is free to move in angular displacement within the chamber. The chamber is charged with a sufficient charge of viscous fluid, such as an appropriate silicone oil, that it fills the annular gap, 13, by centrifugal force while the shaft system is rotating, to provide a damping medium between the inner shaft with its attached drum, 12, and the outer shaft, 4.

The inner shaft 5, is supported against whip by bearing, 14, attached to the outer shaft, 4.

In operation, the inner shaft, 5, is designed so that significant torsional displacement or twist occurs along its length at its design torque loading to enable the viscous damping action between the drum, 12, and the liquid charged chamber integral with outer shaft, 5, to occurwith the cyclic fluctuations of torque encountered. So designed, the natural resonant frequency of the inner shaft system, 5, complete with attached high polar moment propeller at one end and internal combustion engine atthe other, is lowespecial- ly in relation to the torsionally stiff outer shaft, 4, which has a very low polar moment and no directly attached mass at its open end. Torsional vibration in the inner shaft system may therefore be fully damped against the outer shaft, while the inner shaft system has no way of exciting the outer shaft, 4, into resonance.

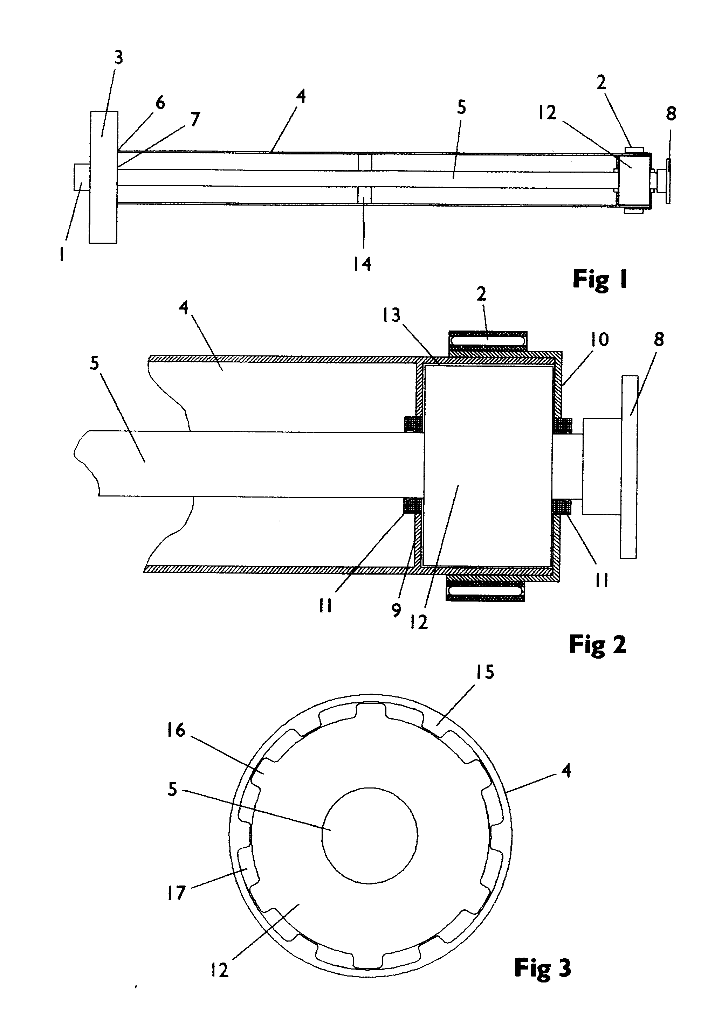

The foregoing description illustrates just one embodiment of the invention, and there are many possible variations which the principle may be exploited. For example, the viscous damping depicted has a damping action directly proportional to instantaneous differential speed of movement between the inner drum, 12, and outer casing. It may prove desirable to have a damping action that varies, as, or more towards the square of the instantaneous differential speed. Such an arrangement is shown in Figure 3 as an end view of an alternative drum arrangement where the inner of the damping chamber integral with outer shaft, 4, has widely spaced "splines", 15, projecting inwards, while the periphery of the drum, 12, is furnished with similar projections, 16, facing outwards. The liquid charge in the wide gaps between these opposing projections then has to be pumped through the narrow clearances around the edges and sides of the projections if an angular displacement is to occur between the drum and outer casing. Apart from being potentially more compact, an additional advantage of this arrangement is that it can provide positive stop to the differential movement to prevent the inner shaft from being overstressed by some external influence, such as someone hand starting the engine by "swinging" the propeller. It would also retain temporary drive integrity in the event of inner shaft failure, a relevant consideration to pilots.

Other variations are possible with respect to the configuration of the system. For example, the driving and driven ends can be opposite to the described examples, or the connection points between inner and outer shafts could be in a different position, such as in the middle of the shaft system, with damper assemblies at either end. Likewise, the necessary torsional flexibility of the inner shaft could be enhanced by the inclusion of a flexible coupling.

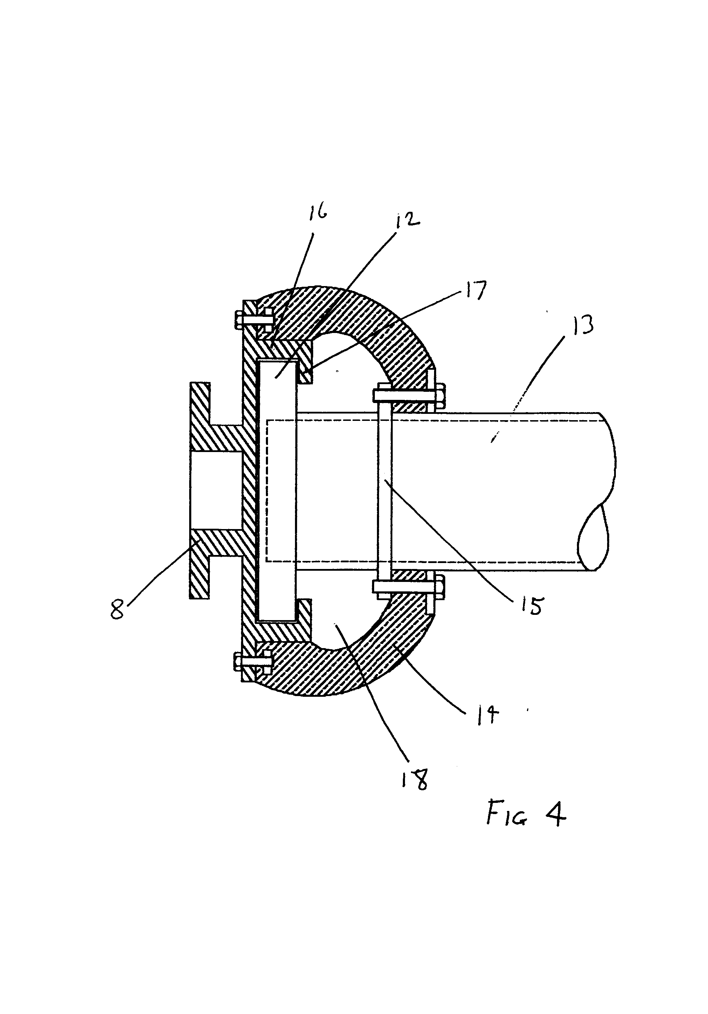

Figure 4 shows a variation of the shaft design where the inner member, 13, is a torsionally stiff tube. The outer co-axial member, 14, which transmits the drive from inner member 13, through drive flange 15 and the outer damper housing 16, to propeller boss, 8, is a relatively short length of elastomer material, which because of its lower modulus of elasticity, is much more torsionally flexible than the inner shaft. Inner damper drum 12 is connected solidly to the end of the inner member 13. The propeller boss and outer damper housing, 8 and 16, are captivated to the inner damper drum 12, by means of flange 17, the periphery and side faces of the inner damper drum 12 being a clearance fit and forming a bearing surface with the outer damper housing 16, such that the propeller boss and outer damper housing are free to move in angular displacement relative to the inner member 13 and inner drum 12. The inner drum 12 may be a simple drum as that shown in Figure 2, or preferably of the type shown in figure 3. The void 18, is filled completely with the damping liquid which also fills the clearance gap between 12 and 16, the elastomer drive element 14 acting also as a sealing membrane to keep the fluid in place. The operation of this embodiment of the invention is essentially the same as for the previously described versions, although by virtue of its potentially compact size and simplicity it may well lend itself to a wider range of alternative applications, particularly as a short "bolt in" coupling without the longer length of drive shaft attached.

## Claims

1 A transmission shaft or coupling system comprising two co-axial members with one member being more torsionally flexible than the other. The two co-axial members are connected solidly together at one end and are torsionally independent of each other along a portion, if not all, of the shaft system length where they terminate in a liquid charged chamber in which they connected torsionally only by means of a viscous or hydro-kinetic liquid damping medium acting between a cylinder or drum connected directly to the inner shaft element and the outer chamber which is connected to the outer shaft element in such a way that the torsionally more flexible shaft or element transmits the whole mean driving torque and results in differential displacements between inner drum and outer chamber of a magnitude sufficient to allow the damping medium to function.

2 A transmission shaft or coupling as in claim 1 but furnished with a damping chamber generally similar to that shown in Figure 3, having the inner drum of the damping chamber, which is solidly fixed to the outer shaft or element, furnished with widely spaced spline like projections projecting inwards, while the periphery of the drum which is fixed to the inner shaft is furnished with similar protections facing outwards such that the liquid charge in the wide gaps between these opposing projections causes a damping action when it is displaced through the narrow clearances around the edges and sides of the projections or through groves or passageways when angular displacement occurs between the drum and outer casing.

3 A transmission shaft or substantially as described herein and shown in Figures 1 to 3 of the accompanying drawings.

4 A transmission shaft or coupling substantially as described herein, but having its outer more flexible torque transmitting member constructed as an elastomeric type boot which seals the damping liquid in and around the inner damping drum and outer damping chamber elements in a manner broadly as depicted in Figure 4.

5 A transmission shaft or coupling as claimed in claim 4, but furnished with a damping chamber generally similar to that shown in Figure 3, having the inner drum of the damping chamber, which is solidly fixed to the outer shaft or element, furnished with widely spaced spline like projections projecting inwards, while the periphery of the drum which is fixed to the inner shaft is furnished with similar projections facing outwards such that the liquid charge in the wide gaps between these opposing projections causes a damping action when it is displaced through the narrow clearances around the edges and sides of the projections or through groves or passageways when angular displacement occurs between the drum and outer casing.
